# FASCICULE DE BREVET EUROPEEN

(11) **EP 0 936 820 B1**
(45) Date de publication et mention de la délivrance du brevet: **12.09.2007**
(21) Numéro de dépôt: 99400313.5
(22) Date de dépôt: 10.02.1999
(51) Int. Cl.: H04Q 1/46, H04M 1/57

(54) **Procédé et dispositif de détection d'un signal d'alerte (CAS) sur une ligne téléphonique**
Verfahren und Vorrichtung zur Detektion von Teilnehmeranschluss-Anrufsignalen (CAS) auf einer Fernsprechleitung
Method and apparatus for detecting a customer premises equipment alerting (CAS) signal on a telephone line

(30) Priorité: 13.02.1998 FR 9801758
(43) Date de publication de la demande: 18.08.1999
(73) Titulaire: NORTEL NETWORKS France, 78117 Châteaufort (FR)
(72) Inventeur: Boulben, Patrick, 29940 la Foret-Fouesnant (FR); Nihouarn, Gilbert, 29180 Guengat (FR)
(74) Mandataire: Loisel, Bertrand

(56) Documents cités:
- WO-A-96/25825
- US-A- 5 519 774
- US-A- 5 649 002
- PATENT ABSTRACTS OF JAPAN vol. 098, no. 001, 30 janvier 1998 & JP 09 233173 A (SONY CORP), 5 septembre 1997

## Description

La présente invention concerne les techniques de détection de signaux composés d'une ou plusieurs composantes fréquentielles sur une ligne téléphonique, ces signaux pouvant être superposés à d'autres signaux acoustiques transmis sur la ligne (parole, musique...).

L'invention s'applique notamment à la détection de signaux DTMF (Dual Tone Multi-Frequency) superposés à la parole sur une ligne téléphonique. Un exemple d'un tel signal DTMF est le signal appelé CAS (Customer's premises equipment Alerting Signal) utilisé dans les services d'identification de l'appelant en cas d'abonné occupé (voir par exemple les spécifications Bellcore TR-NWT-000030 et SR-TSV-002476) .

Dans le cadre de ces services, lorsque le poste d'un abonné appelé est occupé, une identification de l'appelant, telle que son numéro d'annuaire, est transmise sous forme codée après l'envoi du CAS. S'il est apte à traiter le service, le poste détectant le CAS se met temporairement à l'état raccroché (microphone, écouteur, haut-parleur hors circuit) pour recevoir l'information codée identifiant l'appelant. Après avoir reçu cette information, le poste revient à l'état décroché pour poursuivre la communication en cours, et le numéro de l'appelant est affiché pour permettre à l'abonné de l'identifier.

Le CAS consiste en deux tonalités, à 2130 Hz et à 2750 Hz, émises pendant une durée de 80 à 85 ms.

La détection fiable du CAS en présence de parole ou de musique sur la ligne est relativement délicate. Deux problèmes sont rencontrés : (i) le "talkoff" se produit lorsqu'un CAS est détecté par erreur parce que les fréquences qui le composent sont imitées fortuitement par de la parole ou de la musique provenant de l'une ou l'autre des extrémités de la communication en cours ; (ii) le "talkdown" se produit lorsque la détection du CAS est manquée à cause d'interférences dues à de la parole ou à de la musique en provenance du poste recevant ce CAS (les signaux provenant de l'autre poste ne sont pas retransmis par le réseau pendant l'émission du CAS).

Pour améliorer la fiabilité et la détection du CAS, le brevet US 5 649 002 propose d'effectuer une détection préliminaire qui, si elle est positive, conduit à une suppression du signal local permettant, en l'absence d'interférence depuis le poste, de confirmer ou d'infirmer que le CAS est présent. Cette méthode traite uniquement le problème du "talkoff" dû au poste local. Un autre inconvénient est qu'elle perturbe la communication en cours dans des circonstances où le CAS n'est pas détecté.

D'autres méthodes utilisées pour procurer une immunité au phénomène de "talkoff" consistent à faire exécuter par un processeur des algorithmes complexes de comparaison des signaux reçus avec des modèles de "talkoff" préalablement déterminés, afin d'éliminer des fausses détections (voir par exemple brevet US 5 519 774 ou WO 9 625 825).

Un but principal de la présente invention est de proposer une façon simple et efficace pour identifier un signal multifréquence sur une ligne téléphonique en présence de parole ou de musique sur la ligne.

L'invention propose ainsi un procédé de détection tel qu'énoncé dans la revendication 1, et un dispositif correspondant tel qu'énoncé dans la revendication 9.

Le temps de garde utilisé pour les changements du second état (signal d'alerte absent) vers le premier état (signal d'alerte présent) sert à empêcher des fausses détection dues à de la parole ou à de la musique ("talkoff"). Pour les changements d'état dans l'autre sens, le temps de garde empêche que soient prises en compte des désactivations du signal de prédétection dues à des interférences ("talkdown") .

Pendant la période initiale du temps de garde, aucun changement d'état du signal de prédétection n'est autorisé (sinon le décompte du temps de garde est annulé). La durée de cette période initiale peut être choisie de façon à assurer un bon compromis dans les performances d'immunité aux phénomènes de "talkoff" et de "talkdown". Dans la deuxième période du temps de garde, des changements d'état du signal de prédétection sont admissibles dans certaines conditions, telles que par exemple :
- le signal de prédétection ne reste pas de manière ininterrompue dans l'état correspondant à celui du signal de détection pendant une durée supérieure à une durée maximum déterminée ; et/ou
- le nombre de changements du signal de prédétection du premier état vers le second état n'est pas supérieur à un nombre maximum déterminé (cette condition n'est de préférence retenue que pour les changements du signal de détection du second état (signal d'alerte absent) vers le premier état (signal d'alerte présent)).

Le dispositif permet une détection sans perturber l'utilisateur, en isolant le signal local, autrement dit sans provoquer le désagrément que constitue une coupure du signal local surtout quant cette coupure a une forte récurrence.

Un avantage important de ce dispositif est que le circuit de filtrage peut être réalisé de façon simple en logique séquentielle, sans qu'il soit nécessaire de charger un processeur d'algorithmes assurant une détection fiable du signal d'alerte.

D'autres particularités et avantages de la présente invention apparaîtront dans la description ci-après d'un exemple de réalisation non limitatif, en référence aux dessins annexés, dans lesquels :
- la figure 1 est un schéma synoptique de moyens utilisés dans un poste téléphonique pour assurer des fonctions d'identification d'appelant en cas d'occupation du poste ;
- les figures 2 à 4 sont des chronogrammes illustrant la production du signal de détection à partir du signal de prédétection dans un circuit de filtrage du poste de la figure 1 ; et
- la figure 5 est un schéma logique d'un exemple de réalisation d'un tel circuit de filtrage.

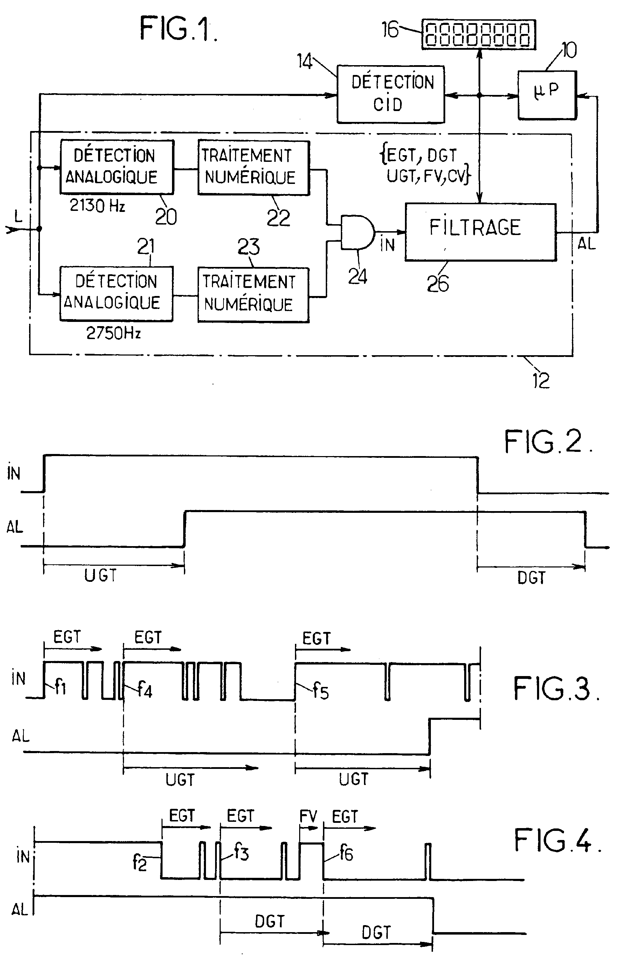

Dans les postes téléphoniques prévus pour être compatibles avec les nouveaux services proposés par les opérateurs, il est généralement prévu un microprocesseur pour commander le fonctionnement général du poste et superviser les traitements effectués dans le cadre de ces services. La figure 1 montre un tel microprocesseur 10.

Dans le cadre particulier du service d'identification d'appelant en cas d'occupation de l'abonné, il est prévu un dispositif 12 pour détecter le signal d'alerte CAS décrit plus haut, et un dispositif 14 pour détecter et décoder l'information CID identifiant l'appelant transmise après le CAS. Ces dispositifs 12,14 peuvent faire partie du même circuit intégré relié à la ligne téléphonique L et pouvant assurer d'autres fonctionnalités en relation avec d'autres services.

Le dispositif 12 adresse au microprocesseur 10 un signal binaire de détection AL qui est par exemple à l'état logique 1 lorsqu'il est déterminé qu'il y a une forte probabilité que le CAS soit présent sur la ligne L, et à l'état logique 0 dans le cas contraire. Dans la pratique, le dispositif 12 peut adresser une interruption au microprocesseur 10 sur chaque front, montant ou descendant, du signal binaire AL.

Le microprocesseur 10 mesure la durée d'activation du signal AL entre ses fronts montant et descendants, et si cette durée tombe dans une plage déterminée (par exemple de 40 à 100 ms), il commande l'envoi sur la ligne L d'un signal d'acquittement (DTMF « D »), la déconnexion vis-à-vis de la ligne L du microphone et de l'écouteur du poste, et l'activation du dispositif 14 pour que celui-ci reçoive et décode l'information identifiant l'appelant envoyée par le réseau. Cette information peut ensuite être présentée à l'abonné sur l'afficheur 16 du poste.

En variante, la durée d'activation du signal AL pourrait être mesurée par un compteur interne au dispositif 12, qui alerterait le processeur lors de la détection d'un CAS de durée valide.

Le CAS ayant deux composantes fréquentielles à 2130 Hz et 2750 Hz, le dispositif de détection 12 comporte deux voies de traitement parallèles comprenant chacune un module 20,21 de détection analogique et un module 22,23 de traitement numérique. Chaque module de détection analogique 20,21 comporte un filtre passe-bande, par exemple à capacités commutées, laissant passer la fréquence correspondante du CAS. La sortie de ce filtre passe-bande est lissée puis limitée à l'aide d'un comparateur à grand gain ayant une hystérésis afin de réduire la sensibilité à différentes perturbations du signal. Les sorties des deux comparateurs sont des ondes rectangulaires qui sont respectivement appliquées aux modules 22,23 de traitement numérique. Chacun de ces modules 22,23 exécute un algorithme classique de comptage pour mesurer la période de l'onde rectangulaire qu'il reçoit et calculer sa moyenne. Si la période moyenne qui en résulte correspond à la fréquence de la tonalité recherchée (2130 Hz ou 2750 Hz), le module de traitement numérique 22,23 délivre un signal à l'état logique 1. Dans le cas contraire, ce signal est à l'état logique 0.

Les deux signaux binaires délivrés par les modules 22,23 sont fournis à une porte ET 24 qui délivre un signal de prédétection IN. Ce signal binaire IN est donc à l'état 1 lorsque les deux fréquences du CAS sont observées sur la ligne L, et l'état 0 sinon.

Le signal de prédétection IN est adressé à un circuit de filtrage 26 qui produit le signal de détection AL.

L'élaboration du signal de détection AL à partir du signal de prédétection IN par le circuit de filtrage 26 est illustrée par les figures 2 à 4. La figure 2 correspond au cas simple où le CAS est reçu sans interférences. Le signal de prédétection IN passe alors à l'état 1 pendant une durée correspondant approximativement à celle du CAS (80 à 85ms). Le front montant du signal de détection AL est retardé d'un temps de garde UGT par rapport au front montant du signal de prédétection IN, et le front descendant du signal de détection AL est retardé d'un temps de garde DGT par rapport au front descendant du signal de prédétection IN.

Pendant le temps de garde UGT, le circuit 26 analyse l'évolution dans le temps du signal IN pour vérifier que son front montant n'était pas dû à un artefact provoqué par de la parole ou de la musique locale ou distante ("talkoff"). Pendant le temps de garde DGT, le circuit 26 analyse l'évolution dans le temps du signal IN pour vérifier que son front descendant n'était pas dû à une interférence destructive engendrée dans l'une ou l'autre des fréquences du CAS par de la parole ou de la musique locale ("talkdown") .

Pour que le signal de détection AL change d'état, le temps de garde UGT ou DGT qui s'est écoulé avant ce changement d'état doit commencer par une période initiale de durée EGT pendant laquelle le signal IN reste dans l'état complémentaire de celui du signal AL. Cette condition n'est pas respectée après les fronts f₁ et f₂ représentés sur les figures 3 et 4, ce qui entraîne la remise à zéro du décompte des temps de garde.

Après la période initiale de durée EGT, le temps de garde UGT, DGT se termine par une deuxième période pendant laquelle des changements du signal de prédétection IN sont admis dans certaines conditions.

L'une de ces conditions est que, pendant la deuxième période du temps de garde, le signal de prédétection IN ne revienne pas dans le même état que le signal de détection AL pour y rester pendant une durée supérieure à une durée maximum notée FV. Cette condition n'est pas remplie après le front descendant f₃ du signal IN représenté sur la figure 4, ce qui entraîne une remise à zéro du décompte du temps de garde DGT.

Une autre de ces conditions est que le nombre de changements d'état du signal de prédétection IN depuis l'état complémentaire de celui du signal de détection AL vers l'état identique à celui du signal de détection AL doit rester inférieur à un nombre maximum de noté CV. Cette condition n'est pas remplie après le front montant f₄ du signal IN représenté sur la figure 3, ce qui entraîne une remise à zéro du décompte du temps de garde UGT (cas où CV = 3).

Cette seconde condition n'est utilisée que pour les temps de garde UGT précédant les fronts montants du signal de détection AL. Pour les temps de garde DGT, seule la première condition (critère FV) est utilisée.

Après les fronts f₅ et f₆ du signal IN représentés sur les figures 3 et 4, le temps de garde UGT, DGT s'est écoulé dans les conditions requises, de sorte que le circuit de filtrage 26 provoque un changement d'état correspondant du signal de détection AL.

La valeur du temps de garde UGT,DGT peut dépendre du sens du changement d'état du signal de détection AL. Dans l'exemple représenté sur les figures 2 à 4, DGT<UGT. De même, les paramètres de durée EGT et FV pourraient être différents selon le sens du changement d'état.

On peut prévoir que les différents paramètres EGT, DGT, UGT, FV, CV utilisés par le circuit de filtrage 26 soient sélectionnables parmi plusieurs valeurs possibles, par une commande appropriée issue du microprocesseur 10. On peut par exemple prévoir huit bits de configuration que le processeur 10 peut adresser au circuit 26 à l'aide d'un bus série, à savoir :
- deux bits pour sélectionner le temps de garde UGT parmi les quatre valeurs suivantes : 20, 25, 30 et 35 ms ;
- deux bits pour sélectionner le temps de garde DGT parmi les quatre valeurs suivantes 18, 20, 22 et 25 ms ;
- deux bits pour sélectionner la valeur de la durée EGT parmi les trois valeurs 0,8, 10,3 et 13,7 ms ou pour ne pas utiliser ce paramètre ;
- un bit pour sélectionner la durée FV parmi les deux valeurs 2 et 4 ms ;
- un bit pour sélectionner le nombre CV parmi les deux valeurs 4 et 3.

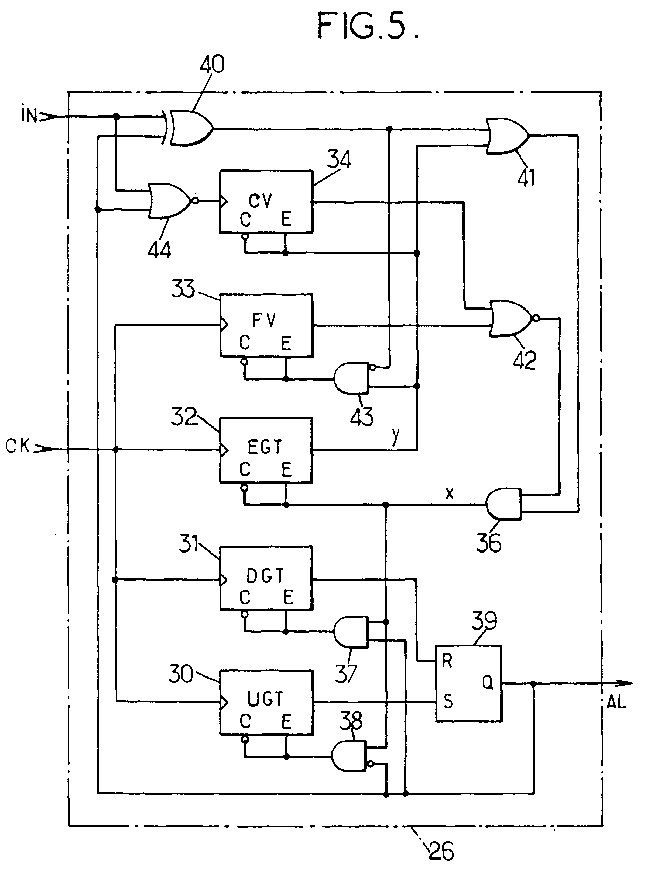

La figure 5 montre un schéma logique d'un exemple de réalisation du circuit de filtrage 26. Ce circuit consiste essentiellement en des portes logiques agencées pour réaliser les comptages temporels et combinaisons requis.

Dans l'exemple représenté, le circuit 26 comprend cinq compteurs 30-34 ayant chacun une entrée d'horloge, une entrée de réinitialisation C (clear) et une entrée de validation E (enable). Chacun des compteurs 30-34 compte les front montants du signal binaire qu'il reçoit sur son entrée d'horloge à compter d'un front descendant sur son entrée de réinitialisation C pendant que son entrée de validation E est à l'état logique 1. Pour chacun des compteurs, l'entrée de réinitialisation C reçoit le complément logique de son entrée de validation E. Chacun des compteurs 30-34 délivre un bit de sortie qui est à l'état logique 0 tant que la valeur de ce compteur reste inférieure à une valeur limite, et à l'état 1 lorsque cette valeur limite est dépassée. Pour les compteurs 30 à 33, ces valeurs limites correspondent respectivement aux durées UGT, DGT, EGT et FV multipliées par la fréquence d'un signal d'horloge CK fourni au circuit 26. Pour le compteur 34, cette valeur limite correspond au nombre CV.

Le signal périodique CK est adressé aux entrées d'horloge des compteurs temporels 30-33.

Le signal x utilisé pour réinitialiser les compteurs 30-32 est délivré par une porte ET 36. Ce signal x est adressé directement à l'entrée de validation du compteur 32 (EGT). Il est adressé à l'entrée de validation E du compteur 31 par l'intermédiaire d'une porte ET 37 dont l'autre entrée reçoit le signal de détection AL, afin que le décompte du temps de garde DGT ne soit effectif que lorsque AL=1. Le signal x est d'autre part adressé à l'entrée de validation E du compteur 30 par l'intermédiaire d'une porte ET 38 dont l'autre entrée reçoit le complément logique du signal de détection AL, afin que le décompte du temps de garde UGT ne soit effectif que lorsque AL=0.

Le signal de détection AL est fourni par la sortie Q d'une bascule RS 39 dont l'entrée R reçoit le bit de sortie du compteur 31 (DGT) et dont l'entrée S reçoit le bit de sortie du compteur 30 (UGT).

Une porte OU EXCLUSIF 40 reçoit les signaux IN et AL, pour détecter s'ils sont dans le même état logique. La sortie de la porte 40 est reliée à une entrée d'une porte OU 41 dont la sortie est reliée à une entrée de la porte ET 36. L'autre entrée de la porte OU 41 reçoit le bit de sortie y du compteur 32. Ce bit y indique si la période initiale, de durée EGT, d'un temps de garde à décompter s'est écoulée (y=1) ou non (y=0). Quand la période initiale de durée EGT n'est pas encore écoulée (y=0), l'état de sortie de la porte OU EXCLUSIF 40 commande la réinitialisation des compteurs 30/31 et 32 : le décompte des durées UGT/DGT et EGT est interrompu dès que le signal de prédétection IN revient au même état logique que le signal de détection AL, pour recommencer au prochain changement d'état du signal IN. En revanche, quand la période initiale du temps de garde s'est écoulée (y=1), un simple changement d'état du signal de prédétection IN ne suffit pas à réinitialiser les compteurs 30-32.

L'autre entrée de la porte ET 36 est reliée à la sortie d'une porte NI 42 dont l'état logique de sortie indique si les conditions retenues pour la deuxième période du temps de garde sont vérifiées. Les deux entrées de la porte 42 reçoivent respectivement les bits de sortie des compteurs 33 et 34.

Une porte ET 43, dont une entrée reçoit le bit y et l'autre entrée reçoit le complément logique du bit de sortie de la porte OU EXCLUSIF 40, délivre le signal de validation fourni à l'entrée E du compteur 33 (FV). Le bit y est d'autre part fourni à l'entrée de validation E du compteur 34 (CV). Le signal fourni à l'entrée d'horloge de ce compteur 34 est issu d'une porte NI 44 recevant le signal de prédétection IN et le signal de détection AL, afin que le décompte du nombre de changements d'état du signal de prédétection ne soit effectif que pour décider des fronts montants du signal de détection.

Dans une variante de réalisation, plus performante mais un peu moins économique, on considère non pas un mais deux signaux de prédétection correspondant aux sorties des modules 22,23 de traitement numérique, qui sont chacun filtrés par des circuits respectifs identiques aux circuits 26 précédemment décrits. Les deux signaux de détection délivrés par ces circuits de filtrage sont combinés par une porte ET dont la sortie est fournie au microprocesseur 10. Ils pourraient également être tous deux fournis au microprocesseur assurant alors le traitement de combinaison.

## Revendications

1. Procédé de détection, sur une ligne téléphonique (L), d'un signal d'alerte (CAS) ayant au moins une composante fréquentielle dans la bande passante de la ligne téléphonique, dans lequel on obtient au moins un signal binaire de prédétection (IN) qui est dans un premier état lorsqu'au moins une composante fréquentielle déterminée du signal d'alerte est observée sur la ligne et dans un second état dans le cas contraire, et on analyse l'évolution dans le temps du signal de prédétection pour produire un signal binaire de détection (AL) ayant des premier et second états correspondant respectivement aux premier et second états du signal de prédétection, **caractérisé en ce qu'**on élabore le signal de détection (AL) de façon que chaque changement d'état du signal de détection intervienne après que se soit écoulé un temps de garde déterminé (UGT,DGT) à partir d'un changement d'état correspondant du signal de prédétection (IN), ce temps de garde écoulé comportant une période initiale de durée déterminée (EGT) pendant laquelle le signal de prédétection reste dans l'état ne correspondant pas à l'état du signal de détection, suivie par une deuxième période pendant laquelle le signal de prédétection peut changer d'état dans des conditions déterminées.

2. Procédé selon la revendication 1, dans lequel la valeur du temps de garde (UGT,DGT) dépend du sens du changement d'état du signal de détection (AL).

3. Procédé selon l'une quelconque des revendications précédentes, dans lequel le temps de garde (UGT,DGT) et/ou la durée (EGT) de ladite période initiale sont des paramètres programmables.

4. Procédé selon l'une quelconque des revendications précédentes, dans lequel une desdites conditions dans lesquelles le signal de prédétection (IN) peut changer d'état dans la deuxième période du temps de garde écoulé (UGT,DGT) est qu'au cours de ladite deuxième période, le signal de prédétection ne reste pas de manière ininterrompue dans l'état correspondant à l'état du signal de détection (AL) pendant une durée supérieure à une durée maximum (FV).

5. Procédé selon la revendication 4, dans lequel ladite durée maximum (FV) est un paramètre programmable.

6. Procédé selon l'une quelconque des revendications précédentes, dans lequel une desdites conditions dans lesquelles le signal de prédétection (IN) peut changer d'état dans la deuxième période du temps de garde écoulé (UGT,DGT) entre un changement du signal de prédétection du second état vers le premier état et un changement correspondant du signal de détection (AL) est qu'au cours de ladite deuxième période, le nombre de changements du signal de prédétection du premier état vers le second état ne soit pas supérieur à un nombre maximum (CV).

7. Procédé selon la revendication 6, dans lequel ledit nombre maximum (CV) est un paramètre programmable.

8. Procédé selon l'une quelconque des revendications précédentes, dans lequel le signal binaire de prédétection (IN) est dans le premier état lorsque chaque composante fréquentielle du signal d'alerte (CAS) est observée sur la ligne.

9. Dispositif pour détecter, sur une ligne téléphonique (L), un signal d'alerte (CAS) ayant au moins une composante fréquentielle dans la bande passante de la ligne téléphonique, comprenant des moyens de prédétection (20-24) reliés à la ligne téléphonique et produisant au moins un signal binaire de prédétection (IN) qui est dans un premier état lorsque au moins une composante fréquentielle déterminée du signal d'alerte est observée sur la ligne et dans un second état dans le cas contraire, et un circuit (26) de filtrage du signal de prédétection pour produire un signal binaire de détection (AL) ayant des premier et second états correspondant respectivement aux premier et second états du signal de prédétection, **caractérisé en ce que** le circuit de filtrage (26) comporte des moyens logiques de comptage temporel agencés pour que chaque changement d'état du signal de détection intervienne après que se soit écoulé un temps de garde déterminé (UGT,DGT) à partir d'un changement d'état correspondant du signal de prédétection (IN), ce temps de garde écoulé comportant une période initiale de durée déterminée (EGT) pendant laquelle le signal de prédétection reste dans l'état ne correspondant pas à l'état du signal de détection, suivie par une deuxième période pendant laquelle le signal de prédétection peut changer d'état dans des conditions déterminées.

10. Dispositif selon la revendication 9, dans lequel les moyens de prédétection sont adaptés de telle façon qu'une desdites conditions dans lesquelles le signal de prédétection (IN) peut changer d'état dans la deuxième période du temps de garde écoulé (UGT,DGT) est qu'au cours de ladite deuxième période, le signal de prédétection ne reste pas de manière ininterrompue dans l'état correspondant à l'état du signal de détection (AL) pendant une durée supérieure à une durée maximum (FV).

11. Dispositif selon la revendication 9 ou 10, dans lequel les moyens de prédétection sont adaptés de telle façon qu'une des dites conditions dans lesquelles le signal de prédétection (IN) peut changer d'état dans la deuxième période du temps de garde écoulé (UGT,DGT) entre un changement du signal de prédétection du second état vers le premier état et un changement correspondant du signal de détection (AL) est qu'au cours de ladite deuxième période, le nombre de changements du signal de prédétection du premier état vers le second état ne soit pas supérieur à un nombre maximum (CV).

12. Dispositif selon l'une quelconque des revendications 9 à 11, dans lequel les moyens de prédétection sont adaptés de telle façon que le signal binaire de prédétection (IN) est dans le premier état lorsque chaque composante fréquentielle du signal d'alerte (CAS) est observée sur la ligne.

## Claims

1. Method for detecting, on a telephone line (L), a customer premises equipment alerting signal (CAS) having at least one frequency component in the bandwidth of the telephone line, wherein there is obtained at least one binary predetection signal (IN) which is in a first state when at least one given frequency component of the alerting signal is observed on the line and is otherwise in a second state, and the development over time of the predetection signal is analysed to produce a binary detection signal (AL) having first and second states corresponding to the first and second states of the predetection signal respectively, **characterised in that** the detection signal (AL) is elaborated in such a way that each change in state of the detection signal occurs after a given guard time (UGT, DGT) has elapsed from a corresponding change in state of the predetection signal (IN), this elapsed guard time comprising a given initial period of time (EGT) during which the predetection signal remains in the state not corresponding to the state of the detection signal, followed by a second period during which the predetection signal may change state under given conditions.

2. Method according to claim 1, wherein the value of the guard time (UGT, DGT) is dependent on the direction of the change in state of the detection signal (AL).

3. Method according to either of the preceding claims, wherein the guard time (UGT, DGT) and/or the duration (EGT) of said initial period are programmable parameters.

4. Method according to any one of the preceding claims, wherein one of said conditions under which the predetection signal (IN) may change state in the second period of the elapsed guard time (UGT, DGT) is that during said second period the predetection signal does not remain continuously in the state corresponding to the state of the detection signal (AL) for a time greater than a maximum time (FV).

5. Method according to claim 4, wherein said maximum time (FV) is a programmable parameter.

6. Method according to any one of the preceding claims, wherein one of said conditions under which the predetection signal (IN) may change state in the second period of the elapsed guard time (UGT, DGT) between a change in the predetection signal from the second state to the first state and a corresponding change in the detection signal (AL) is that during said second period the number of changes in the predetection signal from the first state to the second state is not greater than a maximum number (CV).

7. Method according to claim 6, wherein said maximum number (CV) is a programmable parameter.

8. Method according to any one of the preceding claims, wherein the binary predetection signal (IN) is in the first state when each frequency component of the customer premises equipment alerting signal (CAS) is observed on the line.

9. Device for detecting, on a telephone line (L), a customer premises equipment alerting signal (CAS) having at least one frequency component in the bandwidth of the telephone line, comprising predetection means (20 - 24) connected to the telephone line and producing at least one binary predetection signal (IN) which is in a first state when at least one given frequency component of the alerting signal is observed on the line and is otherwise in a second state, and a circuit (26) for filtering the predetection signal to produce a binary detection signal (AL) having first and second states corresponding to the first and second states of the predetection signal respectively, **characterised in that** the filtering circuit (26) comprises time counting logic means configured so that each change in state of the detection signal occurs after a given guard time (UGT, DGT) has elapsed from a corresponding change in state of the predetection signal (IN), this elapsed guard time comprising a given initial period of time (EGT) during which the predetection signal remains in the state not corresponding to the state of the detection signal, followed by a second period during which the predetection signal may change state under given conditions.

10. Device according to claim 9, wherein the predetection means are adapted in such a way that one of said conditions under which the predetection signal (IN) may change state in the second period of the elapsed guard time (UGT, DGT) is that during said second period the predetection signal does not remain continuously in the state corresponding to the state of the detection signal (AL) for a time greater than a maximum time (FV).

11. Device according to either claim 9 or claim 10, wherein the predetection means are adapted in such a way that one of said conditions under which the predetection signal (IN) may change state in the second period of the elapsed guard time (UGT, DGT) between a change in the predetection signal of the second state to the first state and a corresponding change in the detection signal (AL) is that during said second period the number of changes in the predetection signal from the first state to the second state is not greater than a maximum number (CV).

12. Device according to any one of claims 9 to 11, wherein the predetection means are adapted in such a way that the binary predetection signal (IN) is in the first state when each frequency component of the customer premises equipment alerting signal (CAS) is observed on the line.

## Patentansprüche

1. Verfahren zum Aufspüren eines Alarmsignals (CAS) auf einer Fernsprechleitung mit mindestens einer Frequenzkomponente im Durchlassband der Fernsprechleitung, in welchem mindestens ein binäres Frühwarnsignal (IN) erhalten wird, das sich in einem ersten Zustand befindet, wenn mindestens eine bestimmte Frequenzkomponente des Alarmsignals auf der Fernsprechleitung festgestellt wird und sich im umgekehrten Fall in einem zweiten Zustand befindet, und in welchem die zeitliche Entwicklung des Frühwarnsignals analysiert wird, um ein binäres Aufspürsignal (AL) mit einem ersten und einem zweiten Zustand zu erzeugen, die jeweils dem ersten bzw. zweiten Zustand des Frühwarnsignals entsprechen, **dadurch gekennzeichnet, dass** das Aufspürsignal so bearbeitet wird, dass jede Zustandsänderung des Aufspürsignals erst erfolgt, nachdem ab einer dem Frühwarnsignal (IN) entsprechenden Zustandsänderung eine bestimmte Haltezeit (UGT, DGT) verstrichen ist, wobei diese verstrichene Haltezeit einen Anfangszeitabschnitt von bestimmter Dauer (EGT) umfasst, während der das Frühwarnsignal in dem nicht dem Zustand des Aufspürsignals entsprechenden Zustand verharrt, gefolgt von einem zweiten Zeitabschnitt, während dem das Frühwarnsignal seinen Zustand unter bestimmten Voraussetzungen ändern kann.

2. Verfahren nach Anspruch 1 in welchem der Wert für die Haltezeit (UGT, DGT) von der Richtung der Zustandsänderung des Aufspürsignals abhängt.

3. Verfahren nach einem der vorhergehenden Ansprüche, in welchem die Haltezeit (UGT, DGT) und/oder die Dauer (EGT) des Anfangszeitabschnitts programmierbare Parameter darstellen.

4. Verfahren nach einem der vorhergehenden Ansprüche, in welchem eine der Voraussetzungen, unter denen sich das Frühwarnsignal (IN) im zweiten Zeitabschnitt der verstrichenen Haltezeit (UGT, DGT) ändern kann, erst im Verlauf des zweiten Zeitabschnitts einritt und das Frühwarnsignal nicht ununterbrochen in dem Zustand verharrt, der dem Zustand des Aufspürsignals (AL) während einer längeren Zeitspanne als einer maximalen Dauer (FV) entspricht.

5. Verfahren nach Anspruch 4, in welchem die maximale Dauer (FV) ein programmierbarer Parameter ist.

6. Verfahren nach einem der vorhergehenden Ansprüche, in welchem eine der Voraussetzungen, unter denen sich das Frühwarnsignal (IN) im zweiten Zeitabschnitt der verstrichenen Haltezeit (UGT, DGT) zwischen einer Änderung des Frühwarnsignals vom zweiten Zustand zum ersten Zustand und einer dem Aufspürsignal (AL) entsprechenden Änderung ändern kann, erst im Verlauf des zweiten Zeitabschnitts einritt, wobei die Anzahl der Veränderungen des Frühwarnsignals vom ersten Zustand zum zweiten Zustand nicht größer sein soll als eine maximale Anzahl (CV).

7. Verfahren nach Anspruch 6, in welchem die maximale Anzahl (CV) ein programmierbarer Parameter ist.

8. Verfahren nach einem der vorhergehenden Ansprüche, in welchem sich das binäre Frühwarnsignal (IN) im ersten Zustand befindet, wenn auf der Leitung jede Frequenzkomponente des Alarmsignals (CAS) festgestellt wird.

9. Vorrichtung zum Aufspüren eines Alarmsignals auf einer Fernsprechleitung (L) mit mindestens einer Frequenzkomponente im Durchlassband der Fernsprechleitung, welche Frühwarnmittel (20 - 24) umfasst, die mit der Fernsprechleitung verbunden sind und mindesten ein binäres Frühwarnsignal (IN) erzeugen, das sich in einem ersten Zustand befindet, wenn mindestens eine bestimmte Frequenzkomponente des Alarmsignals auf der Fernsprechleitung festgestellt wird und sich im umgekehrten Fall in einem zweiten Zustand befindet, und einen Siebkreis (26) für das Frühwarnsignal umfasst, um ein binäres Aufspürsignal (AL) mit einem ersten und einem zweiten Zustand zu erzeugen, die jeweils dem ersten bzw. zweiten Zustand des Frühwarnsignals entsprechen, **dadurch gekennzeichnet, dass** der Siebkreis (26) logische Mittel zur Zeitzählung umfasst, die so konzipiert sind, dass jede Zustandsänderung des Aufspürsignals erst erfolgt, nachdem ab einer dem Frühwarnsignal (IN) entsprechenden Zustandsänderung eine bestimmte Haltezeit (UGT, DGT) verstrichen ist, wobei diese verstrichene Haltezeit einen Anfangszeitabschnitt von bestimmter Dauer (EGT) umfasst, während der das Frühwarnsignal in dem nicht dem Zustand des Aufspürsignals entsprechenden Zustand verharrt, gefolgt von einem zweiten Zeitabschnitt, während dem das Frühwarnsignal seinen Zustand unter bestimmten Voraussetzungen ändern kann.

10. Vorrichtung nach Anspruch 9, in welcher die Frühwarnmittel so konzipiert sind, dass eine der Voraussetzungen, unter denen sich das Frühwarnsignal (IN) im zweiten Zeitabschnitt der verstrichenen Haltezeit (UGT, DGT) ändern kann, erst im Verlauf des zweiten Zeitabschnitts einritt und das Frühwarnsignal nicht ununterbrochen in dem Zustand verharrt, der dem Zustand des Aufspürsignals (AL) während einer längeren Zeitspanne als einer maximalen Dauer (FV) entspricht.

11. Vorrichtung nach Anspruch 9 oder 10, in welcher die Frühwarnmittel so konzipiert sind, dass eine der Voraussetzungen, unter denen sich das Frühwarnsignal (IN) im zweiten Zeitabschnitt der verstrichenen Haltezeit (UGT, DGT) zwischen einer Änderung des Frühwarnsignals vom zweiten Zustand zum ersten Zustand und einer dem Aufspürsignal (AL) entsprechenden Änderung ändern kann, erst im Verlauf des zweiten Zeitabschnitts einritt, wobei die Anzahl der Veränderungen des Frühwarnsignals vom ersten Zustand zum zweiten Zustand nicht größer sein soll als eine maximale Anzahl (CV).

12. Vorrichtung nach einem der Ansprüche 9 bis 11, in welcher die Frühwarnmittel so konzipiert sind, dass sich das binäre Frühwarnsignal (IN) im ersten Zustand befindet, wenn auf der Leitung jede Frequenzkomponente des Alarmsignals (CAS) festgestellt wird.
